# EUROPEAN PATENT SPECIFICATION

(11) **EP 3 112 832 B1**
(45) Date of publication and mention of the grant of the patent: **27.03.2019**
(21) Application number: 16176499.8
(22) Date of filing: 27.06.2016
(51) Int. Cl.: G01K 13/02

(54) **SYSTEMS FOR PREVENTING ICE ACCUMULATION**
SYSTEME ZUR VERHINDERUNG VON EISANSAMMLUNG
SYSTÈMES PERMETTANT D'ÉVITER L'ACCUMULATION DE GLACE

(30) Priority: 26.06.2015 US 201562185224 P
(43) Date of publication of application: 04.01.2017
(73) Proprietor: Rosemount Aerospace Inc., Burnsville, MN 55306-4898 (US)
(72) Inventor: GMACH, Matthew J. T., Eagan, MN 55123 (US); SABLE, Robert E., Lakeville, MN 55044 (US); WIGEN, Scott, Eagan, MN 55123 (US); KUNKEL, Matthew J., Minneapolis, MN 55412 (US)
(74) Representative: Dehns

(56) References cited:
- EP-A1- 1 837 636
- EP-A2- 2 866 011
- WO-A1-94/25842
- FR-A1- 2 956 737
- GB-A- 2 173 861
- GB-A- 2 435 521
- US-A- 3 512 414
- US-A- 4 047 379
- US-A- 4 403 872
- US-A1- 2002 131 474
- US-B1- 8 100 582

## Description

### FIELD OF INVENTION

The subject matter disclosed herein relates to vehicle sensors and, more specifically, to systems to prevent ice accumulation on vehicle sensors.

### BACKGROUND

Throughout operation, aircraft sensors or probes may accumulate unacceptable amounts of ice, which may cause damage to engine or other component aft of the sensor due to ice shedding events. Some known engine temperature sensors utilize some form of anti-icing heat to prevent or limit the size of ice accretion. However, electrical heating elements may reduce the life span of the probes, and pneumatically anti-iced probes may utilize only a fraction of available energy which can result in poor anti-icing. Accordingly, it is desirable to provide system to improve anti-icing of vehicle sensors or probes.

US3512414 A, EP1837636 A1, GB2435521 A, US4403872 A, US4047379 A, WO94/25842 A1, EP2866011 A2, US2002/131474 A1, FR2956737 A1, GB2173861 A and US8100 582 B1 all disclose total air temperature probes with ice accumulation prevention features. In particular, US3512414 A discloses a slotted airfoil sensor housing having a cavity connected to a hot gas source and a plurality of openings defined in a leading edge.

### BRIEF DESCRIPTION

The present invention provides a probe assembly with an ice accumulation prevention device as recited in independent claim 1. Further details are disclosed in the dependent claims.

### BRIEF DESCRIPTION OF THE DRAWINGS

The foregoing and other features, and advantages of embodiments are apparent from the following detailed description taken in conjunction with the accompanying drawings in which:
FIG. 1 is a cross-sectional view of an aircraft engine having probe assembly according to one embodiment;
FIG. 2 is perspective view of the assembly shown in FIG. 1;
FIG. 3 is a perspective view of an ice accumulation prevention device that may be utilized with the assembly shown in FIGS. 1 and 2;
FIG. 4 is a plan view of the device shown in FIG. 3;
FIG. 5 is a plan view of an ice accumulation prevention device according to another embodiment;
FIG. 6 is a perspective view of a probe assembly according to yet another embodiment;
FIG. 7 is a perspective view of a probe assembly illustrated for explanatory purposes;
FIG. 8 is a perspective view of a probe assembly illustrated for explanatory purposes;
FIG. 9 is a perspective view of a probe assembly illustrated for explanatory purposes; and
FIG. 10 is a perspective view of a probe assembly illustrated for explanatory purposes.

### DETAILED DESCRIPTION

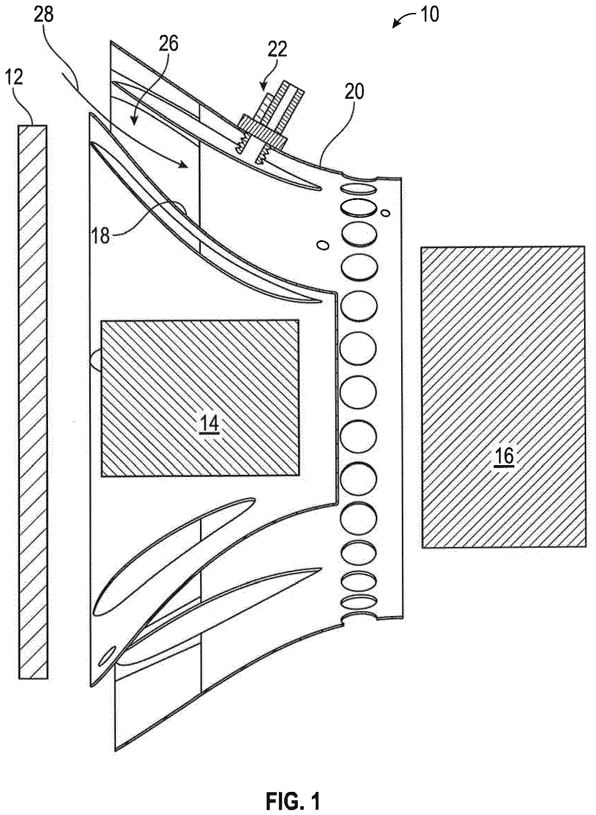

FIG. 1 illustrates a portion of an aircraft engine 10 that generally includes a fan 12, a low-pressure compressor 14, a high-pressure compressor 16, an inner case 18, an outer case 20, and a sensor or probe assembly 22 that includes an ice accumulation prevention device 24.

In the illustrated embodiment, probe assembly 22 is coupled to and extends through outer case 20 into a cavity 26 formed between inner case 18 and outer case 20. Cavity 26 is configured to direct an airflow 28 across probe assembly 22 to high-pressure compressor 16. Probe assembly 22 is configured to measure a parameter of airflow 28 such as temperature. Although ice accumulation prevention device 24 is illustrated with aircraft engine 10, device 24 may be utilized in various other locations of an aircraft or with other vehicles to prevent ice accumulation on an object.

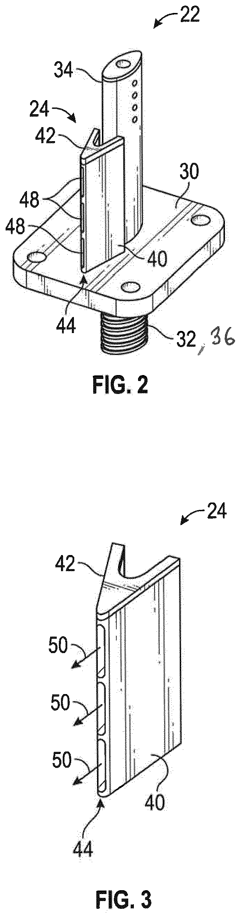

With reference to FIG. 2, probe assembly 22 includes a base platform 30, pneumatic connector 36, and electrical connector 32, a probe housing 34 that houses a probe element (not shown), and ice accumulation reduction device 24. Base platform 30 is configured to couple to a vehicle component such as engine outer case 20. Connector 32 provides a conduit for an electrical or signal communication to the probe element such as an electrical wire. Connector 36 provides a pneumatic connection to device 24, which receives a heated, pressurized fluid (e.g., air) from a source such as the compressor section of engine 10. Probe housing 34 is configured to couple to base platform 30, and the probe element is disposed within probe housing 34 and configured to sense a parameter or condition of the air passing thereby.

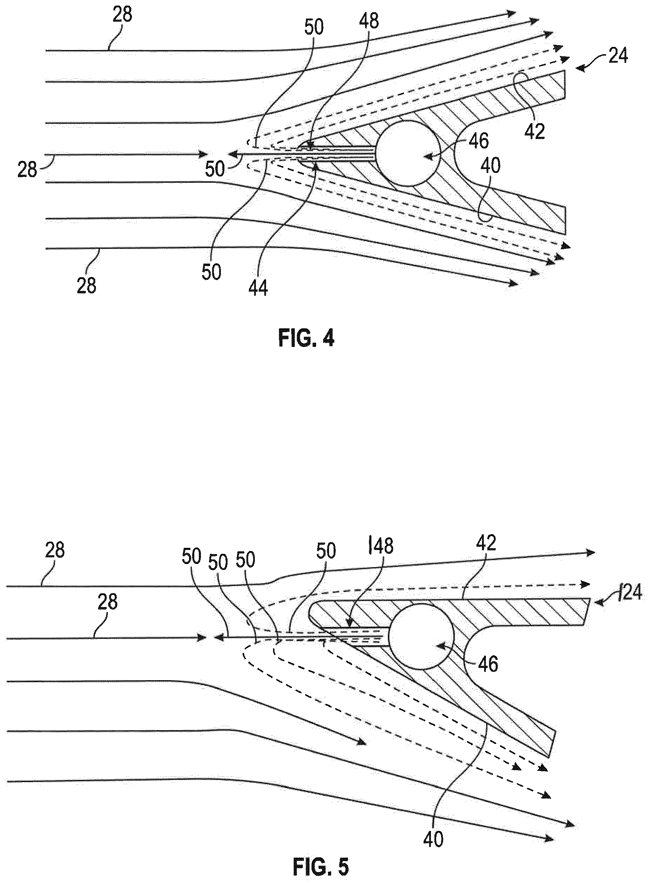

With reference to FIGS. 3 and 4, ice accumulation prevention device 24 is generally wedge-shaped and is positioned upstream of probe housing 34 to form a probe assembly. As such, airflow 28 passes over device 24 before probe housing 34. Device 24 generally includes converging first and second walls 40, 42, a leading edge 44, a pneumatic passage 46 (FIG. 4), and one or more ejection port 48. Pneumatic passage 46 is fluidly coupled to pneumatic connector 36 and receives the heated, pressurized fluid therefrom.

Ejection ports 48 are formed in leading edge 44 and are fluidly coupled to passage 46 to receive the heated, pressurized air. In the illustrated embodiment, ports 48 are elongated slots. However, ports 48 may have any suitable shape that enables device 24 to function as described herein. For example, ports 48 may be circular. Ejection ports 48 are configured to produce heated, pressurized fluid or air jets 50, and to direct jets 50 into air flow 28. Accordingly, as illustrated in FIG. 4, airflow 28 and water droplets contained therein are directed around walls 40, 42, thereby preventing the water droplets from contacting and building up as ice on probe housing 34 or device 24. Moreover, the heated air heats leading edge 44, walls 40, 42, and/or other portions of device 24, which further prevents ice accumulation thereon.

FIG. 5 illustrates an ice accumulation prevention device 124 that is similar to device 24 except it includes ejection ports 148 formed in first wall 40 rather than in leading edge 44.

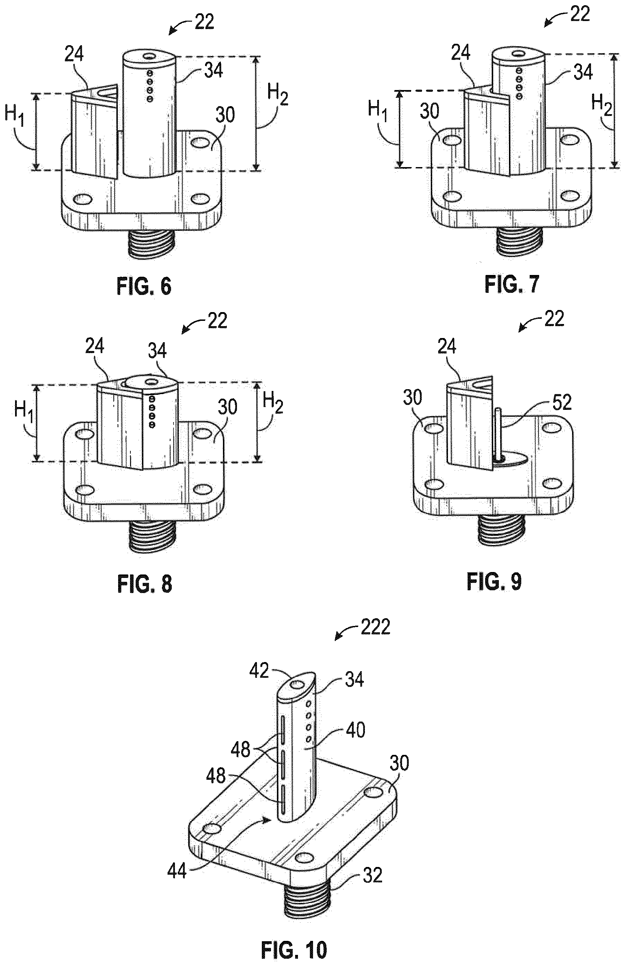

FIG. 6 illustrates an embodiment where ice accumulation prevention device 24 is coupled to base platform 30 in spaced relation to probe housing 34.

FIG. 7 illustrates for explanatory purposes an arrangement where device 24 is coupled to both base platform 30 and probe housing 34. As such, portions of device 24 may have a shape that is complementary to a shape of probe housing 34. In both FIGS, 6 and 7, a height H1 of device 24 is less than a height H2 of probe housing 34. FIG. 8 illustrates for explanatory purposes an arrangement where H1 is equal to H2. FIG. 9 illustrates for explanatory purposes an arrangement where probe assembly 22 does not include a probe housing 34. As such, device 24 is disposed upstream of a probe element 52.

FIG. 10 illustrates for explanatory purposes a probe assembly 222 integrated with the features of the ice accumulation prevention device. In the illustrated arrangement, pneumatic passage 46 and ejection ports 48 are formed in probe housing 34. As such, a separate ice accumulation prevention device is not required. As shown, probe housing 34 is generally airfoil or teardrop shaped. However, probe housing 34 may have any suitable shape that enables probe
assembly 222 to function as described herein. For example, probe housing 34 may be wedge-shaped or elliptical.

Described herein are systems and methods for controlling preventing ice accumulation on an object such as a probe. An ice accumulation prevention device is disposed upstream of a probe that may accumulate ice thereon. The device is fluidly coupled to a fluid line to receive a heated, pressurized fluid such as air. The device includes ejection ports formed therein, and the heated, pressurized air is forced through the ports to form heated, air jets to divert liquid water droplets away from the leading edge of the device. Heat is transferred from the heated, pressurized fluid to portions of the device to prevent ice accumulation thereon. Accordingly, the device prevents ice accumulation of the probe or other object, which may cause damage to surrounding components during ice shedding events.

## Claims

1. A temperature probe assembly (22) comprising:
a base platform (30);
a temperature probe housing (34) coupled to the base platform (30); and
a device (24; 124) coupled to the base platform (30) in spaced relation to the temperature probe housing (34), the device (24; 124) configured to be positioned in an airflow (28) upstream of the temperature probe housing (34) and to prevent ice accumulation thereon, the device configured to prevent ice accumulation comprising:
at least one wall (40, 42) defining a leading edge (44);
a pneumatic passage (46) configured to receive pressurized fluid; and
at least one ejection port (48) formed in at least one of the leading edge (44) and the at least one wall (40, 42), the at least one ejection port (48) fluidly coupled to the pneumatic passage (46) to receive the pressurized fluid therefrom, the at least one ejection port (48) configured to form fluid jets to divert liquid water droplets away from the leading edge (44) of the device.

2. A temperature probe assembly (22) as claimed in claim 1, wherein the at least one ejection port (48) is configured to form heated fluid jets.

3. The temperature probe assembly (22) of claim 1 or 2, further comprising a pneumatic connector (36) coupled to the base platform (30), the pneumatic connector (36) fluidly coupled to the pneumatic passage (46), and an electrical connector (32) coupled to the base platform (30), the electrical connector (32) providing a conduit for an electrical or signal communication to a temperature probe element housed in the temperature probe housing (34).

4. The temperature probe assembly (22) of claim 1, 2, or 3 wherein the at least one wall (40, 42) includes converging first and second walls.

5. The temperature probe assembly (22) of any preceding claim, wherein the device (24; 124) is wedge-shaped.

6. The temperature probe assembly (22) of any of claims 1 to 4, wherein the device (24; 124) is airfoil-shaped.

7. The temperature probe assembly (22) of any preceding claim, wherein the at least one ejection port (48) is an elongated slot.

8. The temperature probe assembly (22) of any preceding claim, wherein the at least one ejection port (48) is formed in the leading edge (44).

9. The temperature probe assembly (22) of any of claims 1-7, wherein the at least one ejection port (48) is formed in the at least one wall (40, 42) at a location that is not at the leading edge (44).

10. The temperature probe assembly (22) of any preceding claim, wherein the pneumatic passage (46) is configured to receive heated, pressurized air, and the at least one ejection port (48) is configured to form heated air jets.

## Patentansprüche

1. Temperaturfühleranordnung (22), umfassend:
eine Basisplattform (30),
ein Temperaturfühlergehäuse (34), das mit der Basisplattform (30) verbunden ist; und
eine Vorrichtung (24; 124), die mit der Basisplattform (30) von dem Temperaturfühlergehäuse (34) beabstandet verbunden ist, wobei die Vorrichtung (24; 124) konfiguriert ist, um in einem Luftstrom (28) vor dem Temperaturfühlergehäuse (34) positioniert zu werden und Eisansammlung darauf zu verhindern, wobei die Vorrichtung, die konfiguriert ist, um Eisansammlung zu verhindern, Folgendes umfasst:
mindestens eine Wand (40, 42), die eine Vorderkante (44) definiert;
einen Pneumatikkanal (46), der konfiguriert ist, um mit Druck beaufschlagtes Fluid aufzunehmen; und
mindestens eine Ausstoßöffnung (48), die in mindestens einem aus der Vorderkante (44) und der mindestens einen Wand (40, 42) ausgebildet ist, wobei die mindestens eine Ausstoßöffnung (48) in Fluidverbindung mit dem Pneumatikkanal (46) steht, um das mit Druck beaufschlagte Fluid von diesem aufzunehmen, wobei die mindestens eine Ausstoßöffnung (48) konfiguriert ist, um Fluidstrahlen zu bilden, um flüssige Wassertropfen von der Vorderkante (44) der Vorrichtung abzuführen.

2. Temperaturfühleranordnung (22) nach Anspruch 1, wobei die mindestens eine Ausstoßöffnung (48) konfiguriert ist, um Heißfluidstrahlen zu bilden.

3. Temperaturfühleranordnung (22) nach Anspruch 1 oder 2, ferner umfassend einen Pneumatikanschluss (36), der mit der Basisplattform (30) verbunden ist, wobei der Pneumatikanschluss (36) in Fluidverbindung mit dem Pneumatikkanal (46) steht, und einen elektrischen Anschluss (32), der mit der Basisplattform (30) verbunden ist, wobei der elektrische Anschluss (32) eine Leitung für eine elektrische oder Signalkommunikation zu einem Temperaturfühlerelement, das im Temperaturfühlergehäuse (34) untergebracht ist, bereitzustellen.

4. Temperaturfühleranordnung (22) nach Anspruch 1, 2 oder 3, wobei die mindestens eine Wand (40, 42) eine konvergierende erste und zweite Wand umfasst.

5. Temperaturfühleranordnung (22) nach einem der vorstehenden Ansprüche, wobei die Vorrichtung (24; 124) keilförmig ist.

6. Temperaturfühleranordnung (22) nach einem der Ansprüche 1 bis 4, wobei die Vorrichtung (24; 124) schaufelblattförmig ist.

7. Temperaturfühleranordnung (22) nach einem der vorstehenden Ansprüche, wobei die mindestens eine Ausstoßöffnung (48) ein länglicher Schlitz ist.

8. Temperaturfühleranordnung (22) nach einem der vorstehenden Ansprüche, wobei die mindestens eine Ausstoßöffnung (48) in der Vorderkante (44) ausgebildet ist.

9. Temperaturfühleranordnung (22) nach einem der Ansprüche 1 - 7, wobei die mindestens eine Ausstoßöffnung (48) in der mindestens einen Wand (40, 42) an einer Stelle ausgebildet ist, die nicht an der Vorderkante (44) ist.

10. Temperaturfühleranordnung (22) nach einem der vorstehenden Ansprüche, wobei der Pneumatikkanal (46) konfiguriert ist, um erwärmte, mit Druck beaufschlagte Luft aufzunehmen, und die mindestens eine Ausstoßöffnung (48) konfiguriert ist, um Heißluftstrahlen zu bilden.

## Revendications

1. Ensemble sonde de température (22) comprenant :
une plateforme de base (30) ;
un logement de sonde de température (34) couplé à la plateforme de base (30) ; et
un dispositif (24 ; 124) couplé à la plateforme de base(30) dans une relation espacée par rapport au logement de sonde de température (34), le dispositif (24 ; 124) configuré pour être positionné dans un écoulement d'air (28) en amont du logement de sonde de température (34) et pour éviter l'accumulation de glace sur celui-ci, le dispositif configuré pour éviter l'accumulation de glace comprenant :
au moins une paroi (40, 42) définissant un bord d'attaque (44) ;
un passage pneumatique (46) configuré pour recevoir un fluide sous pression ; et
au moins un orifice d'éjection (48) formé dans au moins un élément parmi le bord d'attaque (44) et l'au moins une paroi (40, 42), l'au moins un orifice d'éjection (48) couplé de manière fluidique au passage pneumatique (46) pour recevoir le fluide sous pression depuis celui-ci, l'au moins un orifice d'éjection (48) configuré pour former des jets de fluide pour détourner des gouttelettes d'eau liquide du bord d'attaque (44) du dispositif.

2. Ensemble sonde de température (22) selon la revendication 1, dans lequel l'au moins un orifice d'éjection (48) est configuré pour former des jets de fluide chauffé.

3. Ensemble sonde de température (22) selon la revendication 1 ou 2, comprenant en outre un connecteur pneumatique (36) couplé à la plateforme de base (30), le connecteur pneumatique (36) couplé de manière fluidique au passage pneumatique (46), et un connecteur électrique (32) couplé à la plateforme de base (30), le connecteur électrique (32) fournissant un conduit pour une communication électrique ou par signaux vers un élément de sonde de température logé dans le logement de sonde de température (34).

4. Ensemble sonde de température (22) selon la revendication 1, 2 ou 3, dans lequel l'au moins une paroi (40, 42) inclut des première et seconde parois convergentes.

5. Ensemble sonde de température (22) selon l'une quelconque revendication précédente, dans lequel le dispositif (24 ; 124) est en forme de coin.

6. Ensemble sonde de température (22) selon l'une quelconque des revendications 1 à 4, dans lequel le dispositif (24 ; 124) présente un profil aérodynamique.

7. Ensemble sonde de température (22) selon l'une quelconque revendication précédente, dans lequel l'au moins un orifice d'éjection (48) est une fente allongée.

8. Ensemble sonde de température (22) selon l'une quelconque revendication précédente, dans lequel l'au moins un orifice d'éjection (48) est formé dans le bord d'attaque (44).

9. Ensemble sonde de température (22) selon l'une quelconque des revendications 1 à 7, dans lequel l'au moins un orifice d'éjection (48) est formé dans l'au moins une paroi (40, 42) à un endroit qui ne se situe pas au niveau du bord d'attaque (44) .

10. Ensemble sonde de température (22) selon l'une quelconque revendication précédente, dans lequel le passage pneumatique (46) est configuré pour recevoir de l'air chauffé et sous pression, et l'au moins un orifice d'éjection (48) est configuré pour former des jets d'air chauffé.
